# EUROPEAN PATENT SPECIFICATION

(11) **EP 1 559 930 B1**
(45) Date of publication and mention of the grant of the patent: **22.07.2009**
(21) Application number: 05001459.6
(22) Date of filing: 25.01.2005
(51) Int. Cl.: F16H 25/22

(54) **Linear movement/rotation mechanism equipped with a ball screw/ball spline mechanism**
Linearbewegung und Drehmechanismus mit Kugelumlaufschraub- und Kugelrinnemechanismus
Mouvement linéaire et mécanisme de rotation avec mécanisme de vis à billes et mécanisme de cannelure à bille

(30) Priority: 27.01.2004 JP 2004017990
(43) Date of publication of application: 03.08.2005
(73) Proprietor: Harmonic Ad, Inc., Azumino-shi Nagano 399-8205 (JP)
(72) Inventor: Aida, Yoshinori Harmonic AD, Inc., Minamiazumi-gun Nagano-ken 399-8205 (JP); Shirasawa, Naomi Harmonic AD, Inc., Minamiazumi-gun Nagano-ken 399-8205 (JP); Misawa, Toshiaki, Matsumoto-shi Nagano-ken 390-0805 (JP)
(74) Representative: Klunker . Schmitt-Nilson . Hirsch

(56) References cited:
- WO-A-99/60285
- DE-A1- 10 219 840
- GB-A- 2 215 428
- JP-A- 10 257 716
- JP-A- 63 231 055

## Description

### BACKGROUND OF THE INVENTION

### 1. Field of the Invention

The present invention relates to a linear movement/rotation mechanism that linearly and/or rotationally moves a drive shaft using a ball screw/ball spline mechanism.

### 2. Related Art

Patent Document 1
   JP-B 07-9260 shows the features of the preamble of claim 1.
Patent Document 2
   JP-B 06-84778

A mechanism that uses a ball screw and a ball spline is known as one example of a mechanism for linearly or rotationally driving a drive shaft. A ball screw/ball spline mechanism constructed so that a ball screw thread and a ball spline groove are formed in an outer circumferential surface of a drive shaft so as to intersect one another and a ball screw nut that engages the ball screw thread and a ball spline nut that engages the ball spline groove are attached to the drive shaft is also known (see Patent Documents 1, 2).

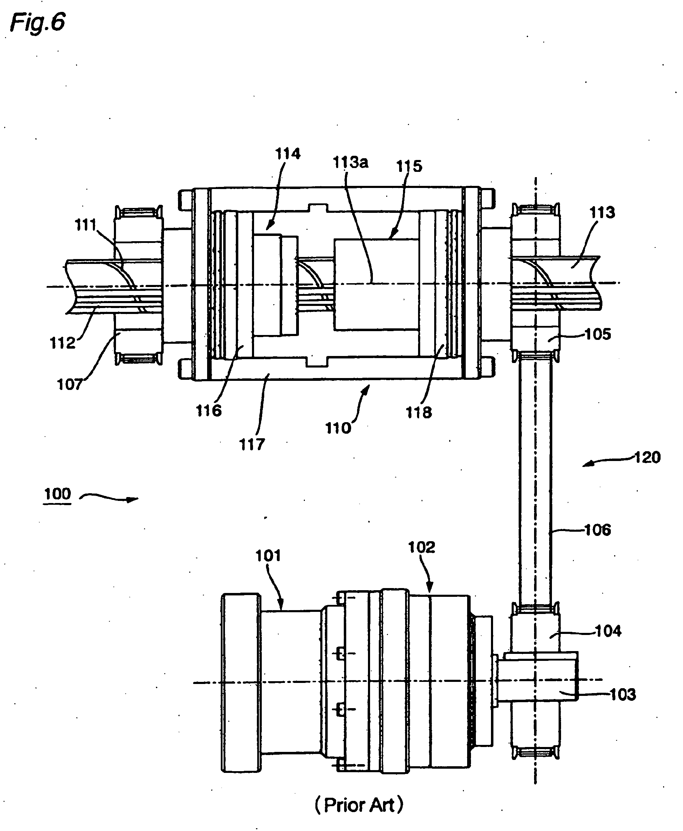

FIG. 6 shows a typical linear movement/rotation mechanism that is equipped with the ball screw/ball spline mechanism of the above construction. A linear movement/rotation mechanism 100 includes a reduction gear 102 that reduces an output rotation of a motor 101, and a belt/pulley transmission mechanism 120 for transmitting a reduced rotation output to a ball screw/ball spline mechanism 110. The ball screw/ball spline mechanism 110 includes a drive shaft 113 in whose outer circumferential surface a ball screw thread 111 and ball spline grooves 112 are formed so as to intersect one another, and a ball screw nut 114 and a ball spline nut 115 that are attached to the drive shaft 113. The ball screw nut 114 is rotatably supported, via a support bearing (not shown), by a housing 116 that covers an outside thereof, with the housing 116 being fixed to a fixed frame 117. The ball spline nut 115 is also rotatably supported via a support bearing (not shown), by a housing 118 that covers an outside thereof, with the housing 118 also being fixed to the fixed frame 117.

The ball screw/ball spline mechanism 110 is disposed in parallel with the reduction gear 102 and a reduced rotation output shaft 103 of the reduction gear 102 is fixed to a driving-side pulley 104. A driven-side pulley 105 is fixed to one end of the ball spline nut 115 of the ball screw/ball spline mechanism 110, and a timing belt 106 is suspended between the driving-side pulley 104 and the driven-side pulley 105. It should be noted that a separate driven-side pulley 107 is also attached to an end of the ball screw nut 114.

When the motor 101 is driven, the output rotation of the motor is reduced by the reduction gear 102 and transmitted to the ball spline nut 115 of the ball screw/ball spline mechanism 110 via the belt/pulley transmission mechanism 120. When the ball spline nut 115 rotates, the drive shaft 113 integrally rotates with the ball spline nut 115. For example, if the ball screw nut 114 is fixed so as not to rotate, the drive shaft 113 moves in a direction of a center axis 113a thereof while rotating. By controlling the rotational direction and rotation amount of the ball spline nut 115, it is possible to cause the drive shaft 113 to linearly move reciprocally with a predetermined stroke.

A conventional linear movement/rotation mechanism has a configuration in which after the output rotation of the motor is reduced by the reduction gear, the reduced output is transmitted via the belt/pulley transmission mechanism to the ball screw/ball spline mechanism that is disposed in parallel with the motor and the reduction gear. Accordingly, the final stage of a rotational force transmission path for the ball screw/ball spline mechanism is the belt/pulley transmission mechanism. Compared to other transmission mechanisms such as gear trains, positioning accuracy of the belt/pulley transmission mechanism is low, and belt strength is also low. Therefore, in cases such as when a large inertial load is present, the positioning accuracy of the drive shaft falls.

### SUMMARY OF THE INVENTION

In view of the above problem, it is a main object of the present invention to provide a linear movement/rotation mechanism equipped with a ball screw/ball spline mechanism that can accurately position a drive shaft even when a large inertial load is applied.

To achieve the above and other objects, a linear movement/rotation mechanism according to the present invention includes:
a drive shaft;
a ball screw/ball spline mechanism;
a hollow planetary reduction gear; and
a rotation input member that receives a rotational force for causing rotation and/or linear movement of the drive shaft,
wherein the ball screw/ball spline mechanism comprises a ball screw thread and a ball spline groove that are formed on a circular outer circumferential surface of the drive shaft, a ball screw nut that engages the ball screw thread, and a ball spline nut that engages the ball spline groove,
the ball screw nut, the ball spline nut, the hollow planetary reduction gear, and the rotation input member are coaxially disposed with the drive shaft extending therethrough,
the rotation input member is connected to a hollow rotational shaft of the hollow planetary reduction gear, and
a reduced rotation output element of the hollow planetary reduction gear is connected to the ball spline nut.

Here, the ball screw nut, the ball spline nut, the hollow planetary reduction gear, and the rotation input member may be disposed in that order along a direction of a center axis of the drive shaft. Alternatively, the ball screw nut, the rotation input member, the hollow planetary reduction gear, and the ball spline nut may be disposed in that order along the direction of the center axis of the drive shaft.

As the hollow planetary reduction gear, it is possible to use a construction including:
a front stage sun gear formed on an outer circumferential surface of the hollow rotational shaft;
a carrier that is rotatably supported outside the front stage sun gear about the center axis;
a plurality of common planetary shafts that are supported by the carrier and extend in a direction parallel to the center axis;
a plurality of front stage planetary gears that are rotatably supported on the respective common planetary shafts and engage the front stage sun gear;
a front stage internal gear that engages the front stage planetary gears;
a plurality of rear stage planetary gears that are rotatably supported on the respective common planetary shafts at positions adjacent to the front stage planetary gears; and
a rear stage internal gear that engages the rear stage planetary gears,
wherein the rear stage internal gear is the reduced rotation output element connected to the ball spline nut.

In addition to the above construction, a linear movement/rotation mechanism according to the present invention may include a tube-like housing and a common bearing, wherein the ball spline nut and the rear stage internal gear are rotatably supported by the tube-like housing via the common bearing.

In the linear movement/rotation mechanism according to the present invention, the hollow planetary reduction gear is coaxially connected to the ball screw/ball spline mechanism. The final stage of a rotational force transmission path for the ball screw/ball spline mechanism is the planetary reduction gear that has high strength, so that compared to the conventional construction where the final stage is a belt/pulley transmission mechanism with low strength and positioning accuracy, the positioning accuracy of the drive shaft can be increased.

Also, in the case where the ball spline nut of the ball screw/ball spline mechanism and the reduced rotation output element (the rear stage internal gear) of the planetary reduction gear are supported by the tube-like housing via the common bearing, compared to the conventional construction where the ball spline nut and the rear stage internal gear are supported using separate bearings, the construction can be made smaller, more compact and cheaper.

### BRIEF DESCRIPTION OF THE DRAWINGS

FIG. 1 is a longitudinal cross-sectional view of a linear movement/rotation mechanism according to the present invention;
FIG. 2 is an explanatory view of a ball screw/ball spline mechanism incorporated in the mechanism shown in FIG. 1;
FIGS. 3A and 3B are respectively a longitudinal cross-sectional view of a hollow planetary reduction gear incorporated in the mechanism shown in FIG. 1 and a schematic diagram showing arrangement of planetary gears;
FIG. 4 is a longitudinal cross-sectional view showing a modification of the linear movement/rotation mechanism shown in FIG. 1;
FIG. 5 is a longitudinal cross-sectional view showing a modification of the hollow planetary reduction gear shown in FIG. 3; and
FIG. 6 is an explanatory view of a typical construction of a linear movement/rotation mechanism that is equipped with a ball screw/ball spline mechanism.

### DESCRIPTION OF THE PREFERRED EMBODIMENTS

Preferred embodiments of a linear movement/rotation mechanism equipped with a ball screw/ball spline mechanism according to the present invention will now be described with reference to the drawings.

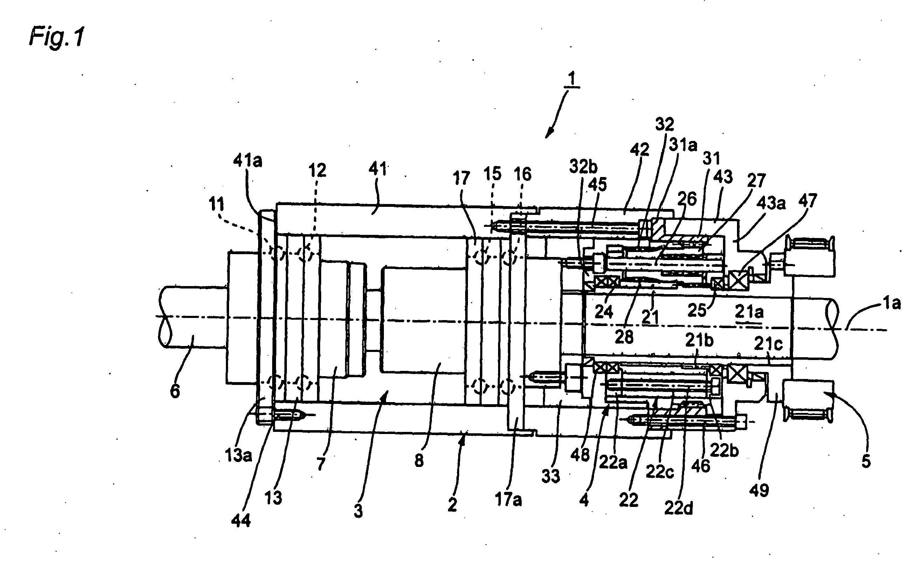

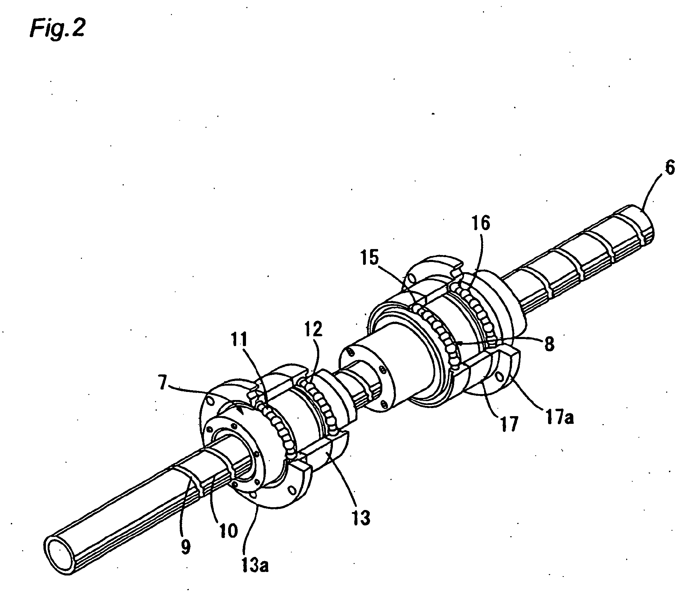

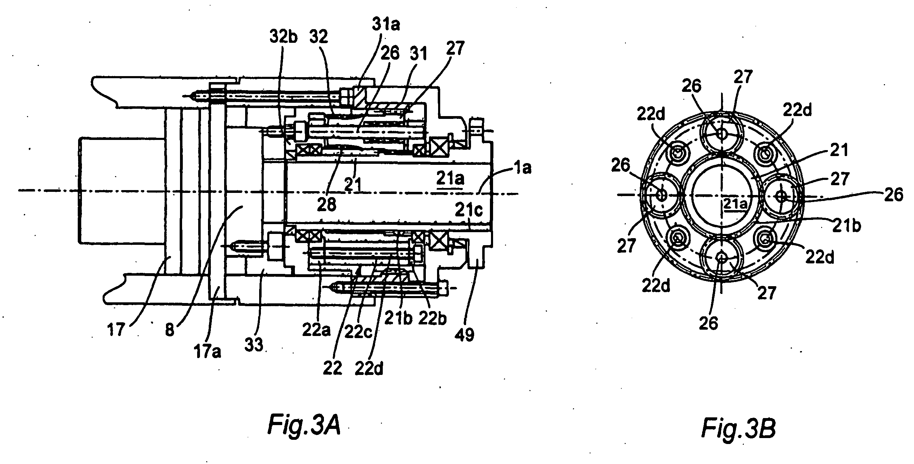

FIG. 1 is a longitudinal cross-sectional view of a linear movement/rotation mechanism, FIG. 2 is an explanatory view of a ball screw/ball spline mechanism of the linear movement/rotation mechanism, and FIGS. 3A and 3B are respectively a longitudinal cross-sectional view of a hollow planetary reduction gear and a schematic diagram showing arrangement of planetary gears. The linear movement/rotation mechanism 1 includes a tube-like housing 2, a ball screw/ball spline mechanism 3 and a hollow planetary reduction gear 4 that are coaxially connected inside the tube-like housing 2, a driven pulley 5 as a rotation input member for inputting a rotational force into the hollow planetary reduction gear 4, and a drive shaft 6 that extends so as to pass through the respective components 3, 4, and 5.

As shown in FIGS. 1 and 2, the ball screw/ball spline mechanism 3 includes a ball screw nut 7, a ball spline nut 8, and a ball screw thread 9 and a plurality of ball spline grooves 10 that are formed on a circular outer circumferential surface of the drive shaft 6. The ball screw thread 9 is formed with a predetermined lead pitch on the outer circumferential surface of the drive shaft 6 and the plurality of ball spline grooves 10 are formed in straight lines on the circular outer circumferential surface of the drive shaft 6 in a direction of a center axis 1a of the drive shaft 6. The ball screw nut 7 is provided with an endless track thread in which balls are disposed in a freely rollable state so as to engage the ball screw thread 9, and is rotatably supported via a left-right pair of support bearings 11, 12 on an inner circumferential surface of a cylindrical housing 13. A large-diameter attachment flange 13a is formed on an outer circumferential surface of the cylindrical housing 13 and is fixed to the tube-like housing 2.

The ball spline nut 8 includes an endless track thread in which balls are disposed in a freely rollable state so as to engage the ball spline grooves 10, and is rotatably supported via a left-right pair of support bearings 15, 16 on an inner circumferential surface of a cylindrical housing 17. A large-diameter attachment flange 17a is formed on an outer circumferential surface of the cylindrical housing 17 and is fixed to the tube-like housing 2.

As shown in FIGS. 1, 3A, and 3B, the hollow planetary reduction gear 4 includes a hollow rotational shaft 21, with the drive shaft 6 passing through a center hole 21a inside the hollow rotational shaft 21 so as to be freely slidable and rotatable. A front stage sun gear 21b is integrally formed on an outer circumferential surface of the hollow rotational shaft 21. A carrier 22 is disposed concentrically with the hollow rotational shaft 21 so as to surround a part of the hollow rotational shaft 21 where a front stage sun gear 21b is formed. The carrier 22 is rotatably supported via left and right bearings 24, 25 on an outer circumferential surface of the hollow rotational shaft 21. The carrier 22 includes a left-right pair of ring-shaped carrier members 22a, 22b, a spacer ring 22c disposed between the ring-shaped carrier members 22a, 22b, and a fastening bolt 22d that fastens and fixes together the three members 22a to 22c.

Four common planetary shafts 26 that are disposed at intervals of a fixed angle in a circumferential direction (90° in the present embodiment) span a gap between the left and right carrier members 22a, 22b of the carrier 22. On the respective common planetary shafts 26, front stage planetary gears 27 and rear stage planetary gears 28 are supported so as to be freely rotatable and disposed in parallel. In the present embodiment, the front stage planetary gears 27 and the rear stage planetary gears 28 are constructed so that the teeth thereof are formed on an outer circumferential surface of a single gear part.

The front stage planetary gears 27 engage a front stage internal gear 31 disposed so as to surround outside thereof. The front stage internal gear 31 is provided with a large-diameter attachment flange 31a that is fixed to the tube-like housing 2. The rear stage planetary gears 28 also engage a rear stage internal gear 32 disposed so as to surround outside thereof The rear stage internal gear 32 is integrally formed with a disc-like part 32b with a center through hole through which the drive shaft 6 passes. The disc-like part 32b is connected to and fixed in a coaxial state to the ball spline nut 8 via a ring-shaped connecting member 33.

The tube-like housing 2 also includes a tube-like part 41 that covers the ball screw/ball spline mechanism 3, and a tube-like part 42 and an end cap 43 that cover the hollow planetary reduction gear 4. The attachment flange 13a of the cylindrical housing 13 of the ball screw nut 7 is tightened and fixed to an end surface 41a of the tube-like part 41 by a fixing bolt 44. The tube-like part 41 and the tube-like part 42 sandwich the attachment flange 17a of the cylindrical housing 17 of the ball spline nut 8 and are coaxially fastened and fixed together by a fastening bolt 45. An open end of the tube-like part 42 is sealed by the end cap 43, and the tube-like part 42 and the end cap 43 sandwich the attachment flange 31a of the front stage internal gear 31 of the hollow planetary reduction gear 4 and are fastened and fixed together by a fastening bolt 46.

The end cap 43 includes a ring-shaped end plate part 43a and a through-hole inner circumferential surface thereof rotatably supports one end of the hollow rotational shaft 21 via a bearing 47. The other end of the hollow rotational shaft 21 is rotatably supported via a bearing 48 by an inner circumferential surface of the disc-like part 32b of the rear stage internal gear 32. The rear stage internal gear 32 is connected and fixed to the ball spline nut 8, and the ball spline nut 8 is rotatably supported by the cylindrical housing 17 via the support bearings 15, 16. Accordingly, the support bearings 15, 16 function as bearings that are common to the ball spline nut 8 and the rear stage internal gear 32.

On the other hand, the hollow rotational shaft 21 of the hollow planetary reduction gear 4 protrudes outward from the end plate part 43a of the end cap 43 and on an outer circumferential surface of a protruding end 21c a large-diameter attachment flange 49 is attached. The driven pulley 5 is coaxially fastened to and fixed to the attachment flange 49.

In the linear movement/rotation mechanism 1 of the construction described above, when a rotational force is transmitted from a rotational driving source, such as a motor, via a belt/pulley mechanism to the driven pulley 5, an input rotation is reduced by the hollow planetary reduction gear 4 and a reduced speed rotation output is outputted from the rear stage internal gear 32. The rear stage internal gear 32 is connected to and fixed to the ball spline nut 8 of the ball screw/ball spline mechanism 3, so that the reduced rotation output is transmitted to the ball spline nut 8 which rotates at reduced speed.

The drive shaft 6 is in ball spline engagement with the ball spline nut 8, so that the drive shaft 6 rotates integrally with the ball spline nut 8 and is free to move in the direction of the center axis 1a. The drive shaft 6 is in ball screw engagement with the ball screw nut 7, so that when the drive shaft 6 rotates in a state where rotation of the ball screw nut 7 is prevented, the drive shaft 6 moves linearly in the direction of the center axis 1a. In a case where the ball screw nut 7 is free to rotate, when the drive shaft 6 rotates, the ball screw nut 7 rotates integrally with the drive shaft 6 and there is no feeding of the drive shaft 6.

Accordingly, if the rotation of the ball screw nut 7 is restricted, the drive shaft 6 moves in the direction of the center axis 1a while rotating. By controlling the rotational direction and amount of rotation of the ball spline nut 8, the drive shaft 6 can be caused to linearly move reciprocally with a predetermined stroke. By allowing the ball screw nut 7 to rotate freely, the drive shaft 6 rotates with no linear movement.

### Alternative Embodiments

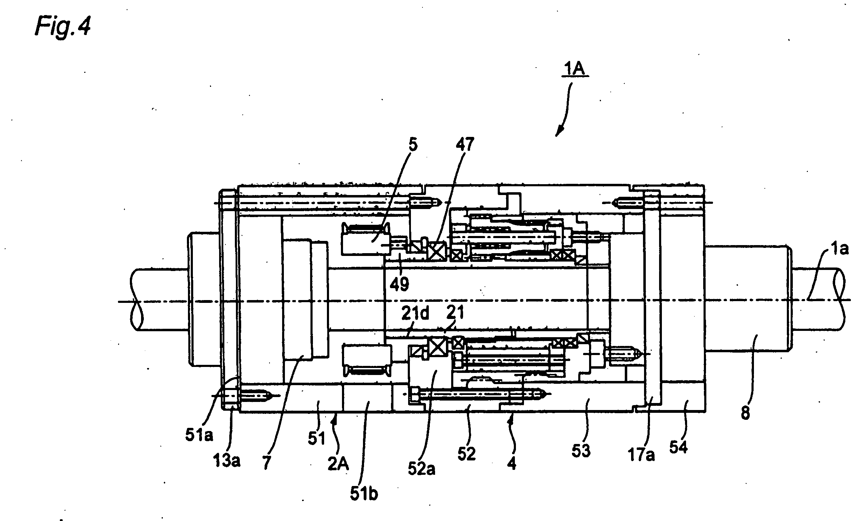

FIG. 4 is a longitudinal cross-sectional view showing a modification of the linear movement/rotation mechanism 1. Since a linear movement/rotation mechanism 1A shown in FIG. 4 has fundamentally the same construction as the linear movement/rotation mechanism 1, corresponding parts have been assigned the same reference numerals and description thereof has been omitted.

The linear movement/rotation mechanism 1A of the present modification is constructed with the ball screw nut 7, the driven pulley 5 that is the input rotation member, the hollow planetary reduction gear 4, and the ball spline nut 8 aligned in that order along the direction of the center axis 1a.

In this way, in the linear movement/rotation mechanism 1A, the driven pulley 5 and the hollow planetary reduction gear 4 are disposed between the ball screw nut 7 and the ball spline nut 8. A tube-like housing 2A is constituted by tube-like members 51, 52, 53, and 54 that are connected and fixed to one another in that order along the center axis 1a in a coaxial state. At one end of the tube-like housing 2A, the attachment flange 13a of the ball screw nut 7 is fixed to an end surface 51a of the tube-like housing 51 and at the other end of the tube-like housing 2A, the tube-like housings 53 and 54 are fastened and fixed to one another with the attachment flange 17a of the ball spline nut 8 sandwiched in between. In addition, a support flange 52a that protrudes inwards is formed on the tube-like housing 52, with an inner circumferential surface of the support flange 52a rotatably supporting one end of the hollow rotational shaft 21 via the bearing 47.

The hollow rotational shaft 21 of the hollow planetary reduction gear 4 includes an end part 21 d that protrudes from the support flange 52a toward the ball screw nut 7 and an attachment flange 49 is attached to an outer circumferential surface part of the end part 21d. The driven pulley 5 is coaxially fixed to the attachment flange 49. An opening 51b through which a belt (not shown) that is suspended on the driven pulley 5 passes is formed in the tube-like housing 51 facing the driven pulley 5. It should be noted that the operation of the linear movement/rotation mechanism 1A is the same as that of the linear movement/rotation mechanism 1 described above.

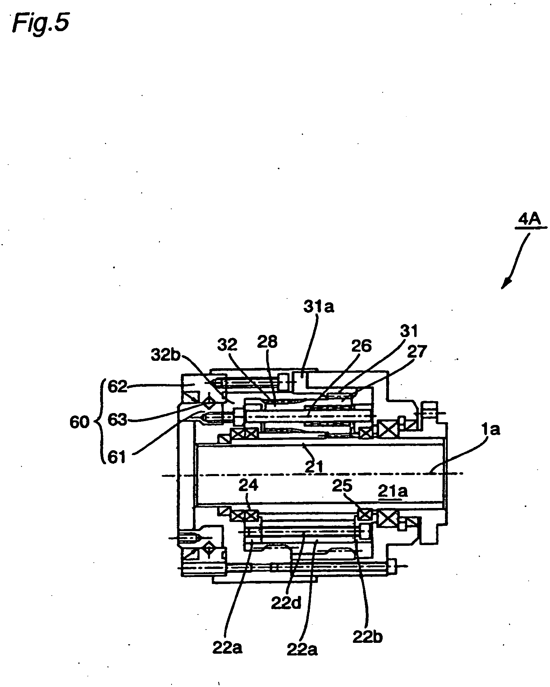

FIG. 5 shows a modification of the hollow planetary reduction gear 4. Since a hollow planetary reduction gear 4A shown in FIG. 5 has fundamentally the same construction as the hollow planetary reduction gear 4, corresponding parts have been assigned the same reference numerals and description thereof has been omitted.

A hollow planetary reduction gear 4A of the present modification is constructed so that the rear stage internal gear 32 is rotatably supported by a cross roller bearing 60. The cross roller bearing 60 includes an inner ring 61 fixed to the disc-like part 32b of the rear stage internal gear 32, an outer ring 62 functioning as part of the tube-like housing 2, and a roller 63 inserted between the inner ring 61 and the outer ring 62 so as to be freely rollable. The inner ring 61 is connected and fixed to the ball spline nut 8 (not shown) in a coaxial state.

In the hollow planetary reduction gear 4A of this construction, the cross roller bearing 60 is used as a reduction gear output bearing for supporting the rear stage internal gear 32 that is the reduced rotation output element. In the hollow planetary reduction gear 4 described above, the support bearings 15, 16 of the ball spline nut 8 serve as the reduction gear output bearing, which is advantageous in making the construction smaller, more compact, and cheaper. On the other hand, the cross roller bearing 60 is used in the hollow planetary reduction gear 4A of the present modification, so that the hollow planetary reduction gear 4A is suited to applications where a large load is applied.

## Claims

1. A linear movement/rotation mechanism (1) comprising:
a drive shaft (6);
a ball screw/ball spline mechanism (3);
a reduction gear (4, 4A); and
a rotation input member (5) that receives a rotational force for causing rotation and/or linear movement of the drive shaft (6);
wherein the ball screw/ball spline mechanism (3) comprises a ball screw thread (9) and a ball spline groove (10) that are formed on a circular outer circumferential surface of the drive shaft (6), a ball screw nut (7) that engages the ball screw thread (9), and a ball spline nut (8) that engages the ball spline groove (10),
**characterized in that**
the reduction gear is a hollow planetary reduction gear (4, 4A),
the ball screw nut (7), the ball spline nut (8), the hollow planetary reduction gear (4, 4A), and the rotation input member (5) are coaxially disposed with the drive shaft (6) extending therethrough,
the rotation input member (5) is connected to a hollow rotational shaft (21) of the hollow planetary reduction gear (4, 4A); and
a reduced rotation output element of the hollow planetary reduction gear (4, 4A) is connected to the ball spline nut (8).

2. A linear movement/rotation mechanism according to Claim 1,
wherein the ball screw nut (7), the ball spline nut (8), the hollow planetary reduction gear (4, 4A), and the rotation input member (5) are disposed in this order along a center axis (4a) of the drive shaft (6).

3. A linear movement/rotation mechanism (1) according to Claim 1,
wherein the ball screw nut (7), the rotation input member (5), the hollow planetary reduction gear (4, 4A), and the ball spline nut (8) are disposed in this order along a center axis (1a) of the drive shaft (6).

4. A linear movement/rotation mechanism (1) according to any of Claim 1 to Claim 3,
wherein the hollow planetary reduction gear (4, 4A) comprises:
a front stage sun gear (21b) formed on an outer circumferential surface of the hollow rotational shaft (21);
a carrier (22) that is rotatably supported outside the front stage sun gear (21b) about the center axis;
a plurality of common planetary shafts (26) that are supported by the carrier (22) and extend parallel to the center axis (1a);
a plurality of front stage planetary gears (27) that are rotatably supported on the respective common planetary shafts (26) and engage the front stage sun gear (21b),
a front stage internal gear (31) that engages the front stage planetary gears (27);
a plurality of rear stage planetary gears (28) that are rotatably supported on the respective common planetary shafts (26) at positions adjacent to the front stage planetary gears (27); and
a rear stage internal gear (32) that engages the rear stage planetary gears (28),
wherein the rear stage internal gear (32) is the reduced rotation output element connected to the ball spline nut (8).

5. A linear movement/rotation mechanism according to Claim 4,
further comprising a tube-like housing (2, 2A) and a common bearing, wherein the ball spline nut (8) and the rear stage internal gear (32) are rotatably supported on the tube-like housing (2, 2A) via the common bearing.

## Patentansprüche

1. Linearbewegungs-/Rotationsmechanismus (1), aufweisend:
eine Antriebswelle (6);
einen Kugelschraub-/Kugellängs-Mechanismus (3);
ein Untersetzungsgetriebe (4, 4A); und
ein Rotationseingangselement (5), das mit einer Rotationskraft beaufschlagt wird, um eine Rotation und/oder eine Linearbewegung der Antriebswelle (6) hervorzurufen;
wobei der Kugelschraub-/Kugellängs-Mechanismus (3) einen Kugelschraubgang (9) und eine Kugellängsnut (10), die an einer kreisförmigen Außenumfangsfläche der Antriebswelle (6) ausgebildet sind, eine mit dem Kugelschraubgang (9) zusammenwirkende Kugelschraubmutter (7) sowie eine mit der Kugellängsnut (10) zusammenwirkende Kugellängsmutter (8) aufweist,
**dadurch gekennzeichnet,**
**dass** das Untersetzungsgetriebe ein hohles Planeten-Untersetzungsgetriebe (4, 4A) ist,
**dass** die Kugelschraubmutter (7), die Kugellängsmutter (8), das hohle Planeten-Untersetzungsgetriebe (4, 4A) und das Rotationseingangselement (5) koaxial mit der sich durch diese hindurch erstreckenden Antriebswelle (6) angeordnet sind,
**dass** das Rotationseingangselement (5) mit einer hohlen Drehwelle (21) des hohlen Planeten-Untersetzungsgetriebes (4, 4A) verbunden ist, und
**dass** ein eine verminderte Rotation aufweisendes Ausgangselement des hohlen Planeten-Untersetzungsgetriebes (4, 4A) mit der Kugellängsmutter (8) in Verbindung steht.

2. Linearbewegungs-/Rotationsmechanismus nach Anspruch 1,
wobei die Kugelschraubmutter (7), die Kugellängsmutter (8), das hohle Planeten-Untersetzungsgetriebe (4, 4A) und das Rotationseingangselement (5) in dieser Reihenfolge entlang einer zentralen Achse (1a) der Antriebswelle (6) angeordnet sind.

3. Linearbewegungs-/Rotationsmechanismus (1) nach Anspruch 1,
wobei die Kugelschraubmutter (7), das Rotationseingangselement (5), das hohle Planeten-Untersetzungsgetriebe (4, 4A) und die Kugellängsmutter (8) in dieser Reihenfolge entlang einer zentralen Achse (1a) der Antriebswelle (6) angeordnet sind.

4. Linearbewegungs-/Rotationsmechanismus (1) nach einem der Ansprüche 1 bis 3,
wobei das hohle Planeten-Untersetzungsgetriebe (4, 4A) Folgendes aufweist:
ein Frontstufen-Sonnenrad (21 b), das an einer Außenumfangsfläche der hohlen Drehwelle (21) ausgebildet ist;
einen Träger (22), der außerhalb von dem Frontstufen-Sonnenrad (21 b) um die zentrale Achse drehbar abgestützt ist;
eine Mehrzahl gemeinsamer Planeten-Wellen (26), die von dem Träger (22) abgestützt sind und sich parallel zu der zentralen Achse (1a) erstrecken;
eine Mehrzahl Frontstufen-Planetenräder (27), die jeweilig auf den gemeinsamen Planeten-Wellen (26) drehbar abgestützt sind und mit dem Frontstufen-Sonnenrad (21 b) zusammenwirken;
ein Frontstufen-Innenrad (31), das mit den Frontstufen-Planetenrädern (27) zusammenwirkt;
eine Mehrzahl Planetenräder (28) einer rückwärtigen Stufe, die jeweilig auf den gemeinsamen Planeten-Wellen (26) an den Frontstufen-Planetenrädern (27) benachbarten Stellen abgestützt sind; und
ein Innenrad (32) der rückwärtigen Stufe, das mit den Planetenrädern (28) der rückwärtigen Stufe zusammenwirkt,
wobei das Innenrad (32) der rückwärtigen Stufe das mit der Kugellängsmutter (8) in Verbindung stehende Ausgangselement mit verminderter Rotation ist.

5. Linearbewegungs-/Rotationsmechanismus nach Anspruch 4,
weiterhin mit einem rohrartigen Gehäuse (2, 2A) und einem gemeinsamen Lager, wobei die Kugellängsmutter (8) und das Innenrad (32) der rückwärtigen Stufe über das gemeinsame Lager an dem rohrartigen Gehäuse (2, 2A) drehbar abgestützt sind.

## Revendications

1. Mécanisme de mouvement linéaire/rotation (1) comprenant :
un arbre d'entraînement (6) ;
un mécanisme de vis à bille/cannelure à bille (3) ;
un réducteur (4, 4A) ; et
un élément d'entrée de rotation (5) qui reçoit une force de rotation pour provoquer le mouvement de rotation et/ou linéaire de l'arbre d'entraînement (6),
dans lequel le mécanisme de vis à bille/cannelure à bille (3) comprend un filet de vis à bille (9) et une rainure de cannelure à bille (10) qui sont formés sur une surface périphérique extérieure circulaire de l'arbre d'entraînement (6), un écrou de vis à bille (7) qui est en prise avec le filet de vis à bille (9), et un écrou de cannelure à bille (8) qui est en prise avec la rainure de cannelure à bille (10),
**caractérisé en ce que**:
le réducteur est un réducteur à engrenages planétaires creux (4, 4A);
l'écrou de vis à bille (7), l'écrou de cannelure à bille (8), le réducteur à engrenages planétaires creux (4, 4A) et l'élément d'entrée de rotation (5) sont disposés coaxialement avec l'arbre d'entraînement (6) s'étendant à travers eux;
l'élément d'entrée de rotation (5) est connecté à un arbre tournant creux (21) du réducteur à engrenages planétaires creux (4, 4A) ; et
un élément de sortie à rotation réduite du réducteur à engrenages planétaires creux (4, 4A) est connecté à l'écrou de cannelure à bille (8).

2. Mécanisme de mouvement linéaire/rotation selon la revendication 1, dans lequel l'écrou de vis à bille (7), l'écrou de cannelure à bille (8), le réducteur à engrenages planétaires creux (4, 4A) et l'élément d'entrée de rotation (5) sont disposés dans cet ordre le long de l'axe (1a) de l'arbre d'entraînement (6).

3. Mécanisme de mouvement linéaire/rotation (1) selon la revendication 1, dans lequel l'écrou de vis à bille (7), l'élément d'entrée de rotation (5), le réducteur à engrenages planétaires creux (4, 4A) et l'écrou de cannelure à bille (8) sont disposés dans cet ordre le long de l'axe (1a) de l'arbre d'entraînement (6).

4. Mécanisme de mouvement linéaire/rotation (1) selon l'une quelconque des revendications 1 à 3, dans lequel le réducteur à engrenages planétaires creux (4, 4A) comprend :
un planétaire d'étage avant (21b) formé sur une surface périphérique extérieure de l'arbre tournant creux (21) ;
un support (22) qui est supporté à rotation à l'extérieur du planétaire d'étage avant (21b) autour de l'axe ;
une pluralité d'arbres planétaires communs (26) qui sont supportés par le support (22) et qui s'étendent parallèlement à l'axe (1a) ;
une pluralité d'engrenages planétaires d'étage avant (27) qui sont supportés à rotation sur les arbres planétaires communs respectifs (26) et se mettent en prise avec le planétaire d'étage avant (21b) ;
un engrenage interne d'étage avant (31) qui se met en prise avec les engrenages planétaires d'étage avant (27) ;
une pluralité d'engrenages planétaires d'étage arrière (28) qui sont supportés à rotation sur les arbres planétaires communs respectifs (26) en des positions adjacentes aux engrenages planétaires d'étage avant (27) ; et
un engrenage interne d'étage arrière (32) qui se met en prise avec les engrenages planétaires d'étage arrière (28),
dans lequel l'engrenage interne d'étage arrière (32) est l'élément de sortie à rotation réduite connecté à l'écrou de cannelure à bille (8).

5. Mécanisme de mouvement linéaire/rotation selon la revendication 4, comprenant en outre un boîtier tubulaire (2, 2A) et un roulement commun, l'écrou de cannelure à bille (8) et l'engrenage interne d'étage arrière (32) étant supportés à rotation sur le boîtier tubulaire (2, 2A) par l'intermédiaire du roulement commun.
